# EUROPÄISCHE PATENTSCHRIFT

(11) **EP 0 824 432 B1**
(45) Veröffentlichungstag und Bekanntmachung des Hinweises auf die Patenterteilung: **22.05.2002**
(21) Anmeldenummer: 97914179.3
(22) Anmeldetag: 28.02.1997
(51) Int. Cl.: B60T 13/72, B60T 13/66

(54) **VERFAHREN ZUM BETRIEB EINES PNEUMATISCHEN BREMSKRAFTVERSTÄRKERS**
METHOD OF OPERATING A PNEUMATIC BRAKE SERVO-UNIT
PROCEDE POUR FAIRE FONCTIONNER UN SERVOFREIN PNEUMATIQUE

(30) Priorität: 09.03.1996 DE 19609192
(43) Veröffentlichungstag der Anmeldung: 25.02.1998
(73) Patentinhaber: Continental Teves AG & Co. oHG, 60488 Frankfurt (DE)
(72) Erfinder: ECKERT, Alfred, D-55294 Bodenheim (DE)
(86) Internationale Anmeldenummer: EP9700988
(87) Internationale Veröffentlichungsnummer: WO9732768

(56) Entgegenhaltungen:
- DE-A- 4 324 688
- DE-A- 19 520 609

## Beschreibung

Die Erfindung betrifft ein Verfahren zum Betrieb eines pneumatischen Bremskraftverstärkers gemäß dem Oberbegriff des Patentanspruchs 1.

Ein unabhängig vom Fahrerwillen elektromechanisch ansteuerbarer Bremskraftverstärker zur Durchführung eines derartigen Verfahrens ist aus der gattungsgemäßen DE 43 24 688 A1 bekannt. Das Besondere an dem vorbekannten Bremskraftverstärker besteht darin, daß, um eine gezielte Dosierung der vom Elektromagneten aufzubringenden Fremdbetätigungskraft zu erreichen, Sensorelemente vorgesehen sind, die eine Erkennung des Ventilkörpers des Steuerventils ermöglichen. Außerdem wird bei der Regelung eine Information über den während des Regelprozesses zurückgelegten Weg des elektromechanisch betätigbaren Dichtsitzes benötigt, so daß weitere Sensorelemente einschließlich der zugehörigen Elektronik erforderlich sind. Die Verwendung der erwähnten Sensorik ist jedoch mit einem erheblichen Kostenaufwand verbunden.

Aus dem in der Automobiltechnischen Zeitschrift ATZ 97 veröffentlichten Fachartikel "Elektronisch geregelter Bremskraftverstärker" ist ein elektrisch betätigbarer Verstärker mit Proportional-Regelung bekannt, dessen Steuerventil durch einen Proportional-Elektromagneten ansteuerbar ist. Weniger vorteilhaft anzusehen sind bei diesem Verstärker sowohl das verhältnismäßig hohe Gewicht des Proportionalmagneten, als auch die dadurch bedingte Vergrößerung der Baugröße des Verstärkers sowie die relativ genaue Steuerung, die als kostenintensiv bezeichnet werden kann.

Es ist daher Aufgabe der vorliegenden Erfindung ein Verfahren der eingangs genannten Gattung vorzuschlagen, bei dessen Durchführung keine zusätzliche Sensorik erforderlich ist und das kostengünstig mit ohnehin vorhandenen Teilen realisierbar ist. Außerdem soll eine Erweiterung des toleranzmäßig festgelegten Regelbereichs ermöglicht werden.

Diese Aufgabe wird erfindungsgemäß dadurch gelöst, daß der im Hauptbremszylinder eingesteuerte hydraulische Druck ermittelt und zusammen mit einem Druckvorgabesignal einem Druckregler zugeführt wird, dessen Ausgangsgröße einem Steuerstrom für den Elektromagneten entspricht und einem Begrenzer zugeführt wird, der die Grenzen des gewünschten Regelbereichs festlegt und dessen Ausgangsgröße mit dem Wert des dem Elektromagneten zugeführten Stromes verglichen wird und das Vergleichsergebnis einem Stromregler zugeführt wird, der die an den Elektromagneten anzulegende Spannung erzeugt.

Vorteilhafte Weiterbildungen des Erfindungsgegenstandes sind in den Unteransprüchen 2 bis 5 aufgeführt.

Eine zweite Lösung der vorhin gestellten Aufgabe besteht darin, daß der im Hauptbremszylinder eingesteuerte hydraulische Druck ermittelt und nach einem Vergleich mit einem Druckvorgabesignal einem nichtlinearen Übertragungsglied mit Beschränkung nach oben und unten zugeführt wird, dem ein Verstärker nachgeschaltet ist, dessen Ausgangsgröße mit dem Wert des dem Elektromagneten zugeführten Stromes verglichen wird und das Vergleichsergebnis einem Stromregler zugeführt wird, der die an den Elektromagneten anzulegende Spannung erzeugt. Dabei ist es vorteilhaft, wenn zur Ausgangsgröße des nichtlinearen Übertragungsglieds ein Vorsteuerungswert hinzuaddiert wird.

Weitere Einzelheiten, Merkmale und Vorteile der Erfindung gehen aus der nachfolgenden Beschreibung von vier Ausführungsbeispielen unter Bezugnahme auf die beiliegende Zeichnung hervor, mit der für einander entsprechende Einzelteile gleiche Bezugszeichen verwendet werden. In der Zeichnung zeigt :
- Fig. 1: eine erste Ausführung eines Bremssystems zur Durchführung des erfindungsgemäßen Verfahrens, stark vereinfacht;
- Fig. 2: eine zweite Ausführung eines Bremssystems zur Durchführung des erfindungsgemäßen Verfahrens in einer der Fig.1 entsprechenden Darstellung,
- Fig. 3: eine dritte Ausführung eines Bremssystems zur Durchführung des erfindungsgemäßen Verfahrens in einer der Fig.1 entsprechenden Darstellung,
- Fig. 4: eine andere Ausführung eines Bremssystems zur Durchführung des erfindungsgemäßen Verfahrensnach Anspruch 6 in einer der Fig.1 entsprechenden Darstellung, und
- Fig. 5a, b und c: Zeitverläufe des dem Elektromagneten zugeführten Stromes (Fig. 5a), des Betätigungsweges der das Steuerventil betätigenden Hülse bzw. des Ankers des Elektromagneten (Fig. 5b) und des bei einer Fremdbetätigung im Hauptbremszylinder eingesteuerten hydraulischen Druckes (Fig. 5c), jeweils bei zwei unterschiedlichen Werten eines die Grenzen des Regelbereichs beeinflussenden Stromkorrekturwertes.

Das in der Zeichnung dargestellte Bremssystem für Kraftfahrzeuge, das insbesondere für Druckregelungsprozesse geeignet ist, besteht im wesentlichen aus einer Betätigungseinheit 1, einem elektronischen Regler, insbesondere einem Druckregler 8 sowie nicht gezeigten Radbremsen. Die Betätigungseinheit 1 besteht ihrerseits aus einem mittels eines Betätigungspedals 4 betätigbaren pneumatischen Bremskraftverstärker, vorzugsweise einem Unterdruck-Bremskraftverstärker 2, dem ein Hauptbremszylinder 3, vorzugsweise ein Tandemhauptzylinder, nachgeschaltet ist, dessen nicht gezeigte Druckräume über hydraulische Leitungen 9, 10 mit den Radbremsen in Verbindung stehen. An das Betätigungspedal 4 ist eine Betätigungsstange 5 angekoppelt, die der mechanischen Betätigung eines lediglich schematisch dargestellten Steuerventils 6 dient, das den Auf- und Abbau eines pneumatischen Differenzdruckes im Gehäuse des Unterdruck-Bremskraftverstärkers 2 steuert. Ein Elektromagnet 7 ermöglicht dabei eine (Fremd-) Betätigung des Steuerventils 6 unabhängig von der Betätigungsstange 5. Die Fremdbetätigung erfolgt dabei vorzugsweise mittels einer mit dem Anker des Elektromagneten 7 zusammenwirkenden, nicht gezeigten Hülse, die einen der Dichtsitze des Steuerventils 6 trägt.

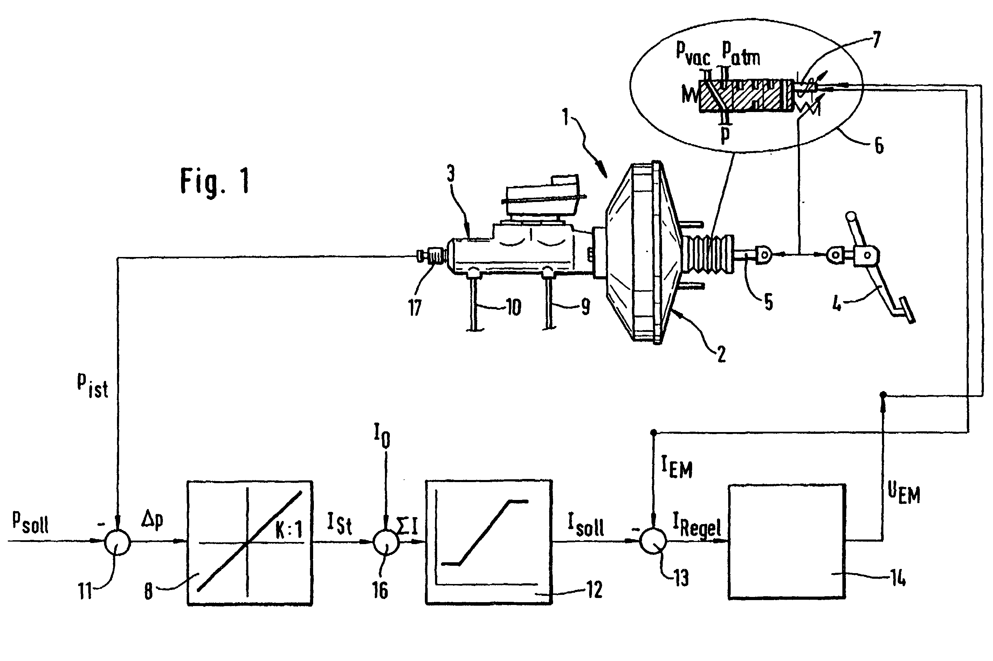

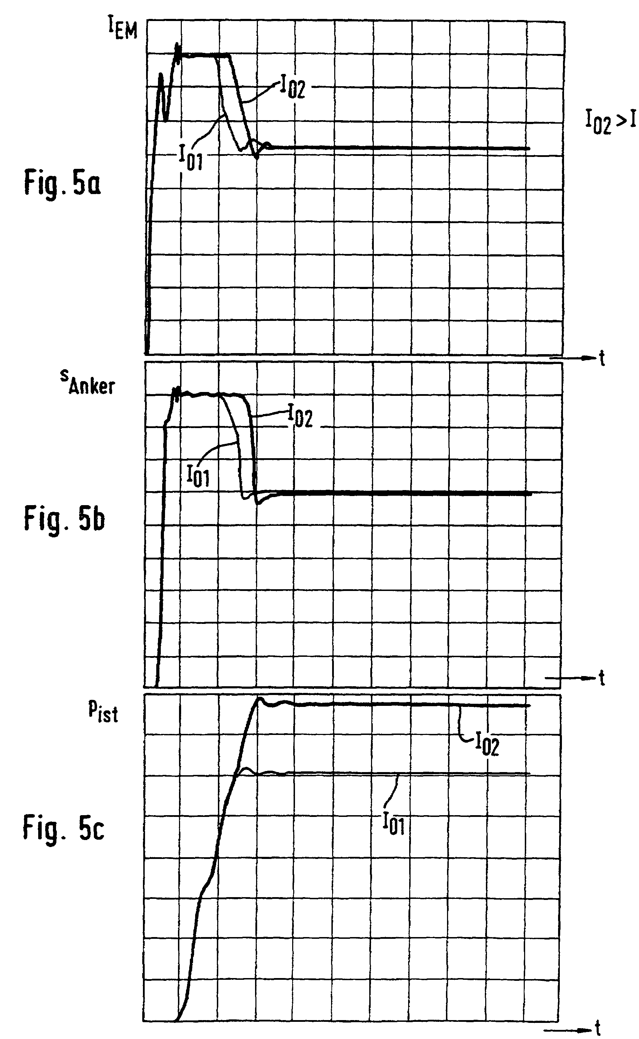

Ein Istdrucksignal Pᵢₛₜ, das von einem an den Hauptbremszylinder 2 angeschlossenen Drucksensor 17 erzeugt wird, wird in einer dem Druckregler 8 vorgeschalteten Vergleichsschaltung 11 mit einem von einem nicht gezeigten, übergeordneten Fahrzeugregler gelieferten Druckvorgabesignal Pₛₒₗₗ verglichen, so daß eine Regelabweichung Δp gebildet ist. Der Druckregler 8 ist in dem in Fig. 1 gezeigten Beispiel als ein proportional wirkendes Übertragungsglied mit konstanter Verstärkung K ausgebildet, dessen Ausgangssignal I_{St} in einer Additionschaltung 16 zu einem fest eingestellten Vorsteuersignal I₀ hinzuaddiert wird, dessen Wert die Grenzen des gewünschten Regelbereichs festlegt. Durch diese Maßnahme kann die Verstärkung K des proportional wirkenden Druckreglers 8 reduziert bzw. der Druckregler 8 in ein nicht lineares Übertragungsglied umgewandelt werden. Außerdem wird dadurch das Verhältnis Signal:Rausch erhöht, so daß eine Verbesserung der Regelbarkeit erreicht wird. Das Additionsergebnis ΣI wird einem Begrenzer 12 zugeführt, dessen Ausgangssignal einen Stromsollwert Iₛₒₗₗ darstellt, der in einer zweiten Vergleichsschaltung 13 mit dem dem Elektromagneten 6 zugeführten, gemessenen Stromwert I_{EM} verglichen wird. Das Vergleichsergebnis I_{Regel} wird in einem der Vergleichsschaltung 13 nachgeschalteten Stromregler 14 zu einem Signalwert verarbeitet, der die an den Elektromagneten 6 angelegte Spannung U_{EM} repräsentiert. Der Einfluß des vorhin erwähnten Vorsteuersignals I₀ auf den Verlauf des dem Elektromagneten 7 zugeführten Stromes I_{EM}, des Betätigungsweges s_{Anker} des Ankers des Elektromagneten 7 sowie des im Hauptbremszylinder 3 bei der Fremdbetätigung eingesteuerten hydraulischen Druckes pᵢₛₜ bei unterschiedlichen Werten I₀₁ und I₀₂ ist Fig.5a,b und c zu entnehmen, wobei I₀₂ > I₀₁ gewählt wurde.

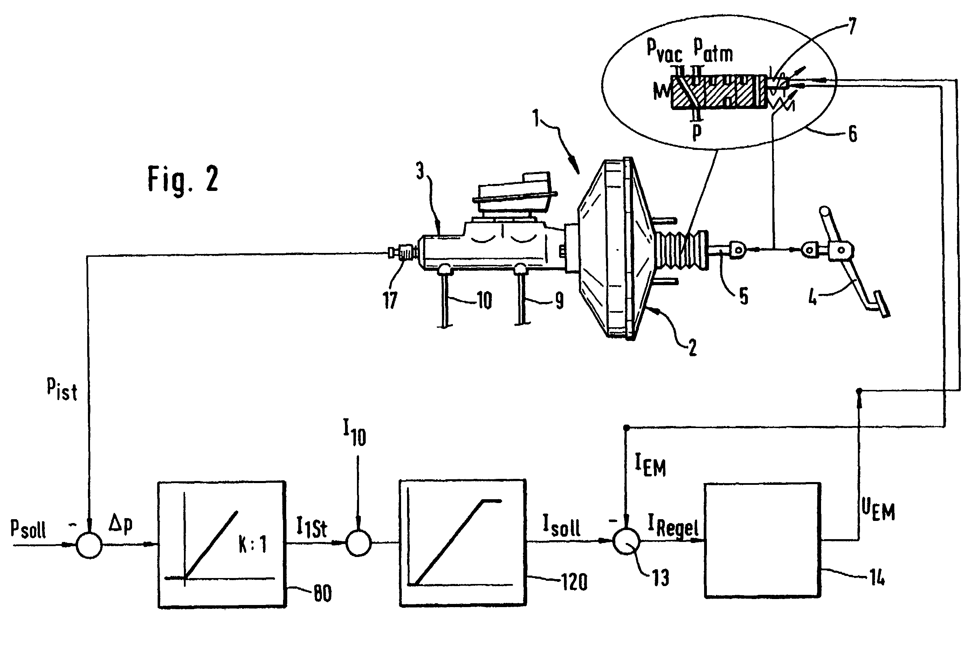

Bei dem in Fig. 2 dargestellten System ist der im Zusammenhang mit Fig. 1 erwähnte Druckregler als ein nicht linear wirkendes Übertragungsglied 80 mit Begrenzung nach unten ausgebildet. Der der Ausgangsgröße I_{1St} des Druckreglers 80 hinzuzuaddierende Vorsteuerungswert I₁₀ stellt den unteren Grenzwert des Regelbereichs dar (durch Verschieben des Wertes I_{1St} = 0 auf der senkrechten Koordinatenachse nach oben). Der obere Grenzwert des Regelbereichs wird, wie im in Fig. 1 dargestellten Beispiel, vom Begrenzer 120 geliefert.

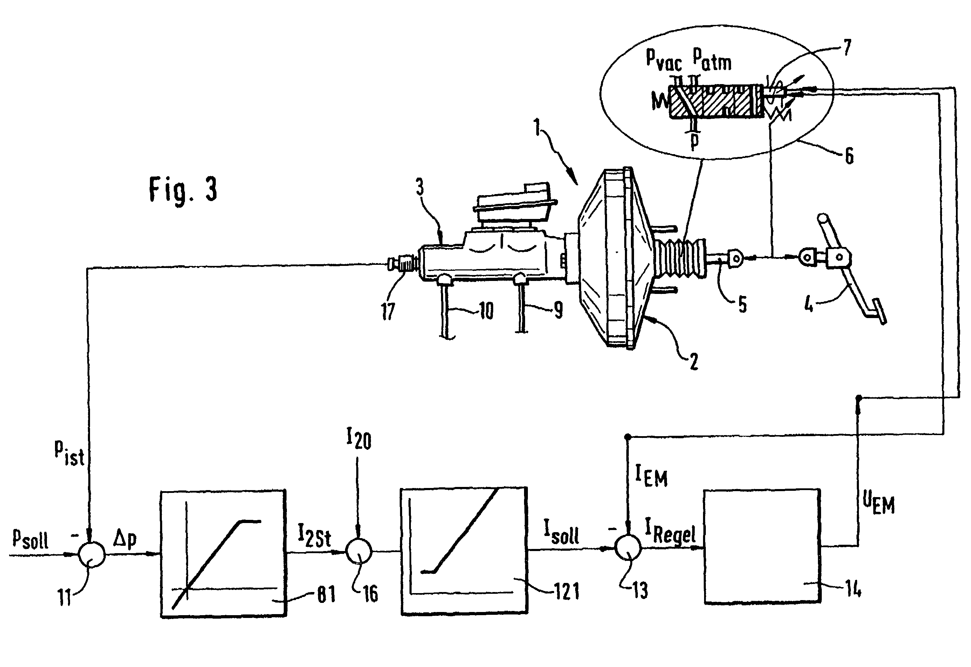

Bei dem in Fig. 3 dargestellten System ist der im Zusammenhang mit Fig. 1 erwähnte Druckregler dagegen als ein nicht linear wirkendes Übertragungsglied 81 mit Begrenzung nach oben ausgebildet. Der der Ausgangsgröße I_{2St} des Druckreglers 81 hinzuzuaddierende Vorsteuerungswert I₂₀ stellt den oberen Grenzwert des Regelbereichs dar (durch Verschieben der Kennlinie des Druckreglers 81 auf der senkrechten Koordinatenachse nach oben). Der untere Grenzwert des Regelbereichs wird, wie im in Fig. 1 dargestellten Beispiel, vom Begrenzer 121 geliefert.

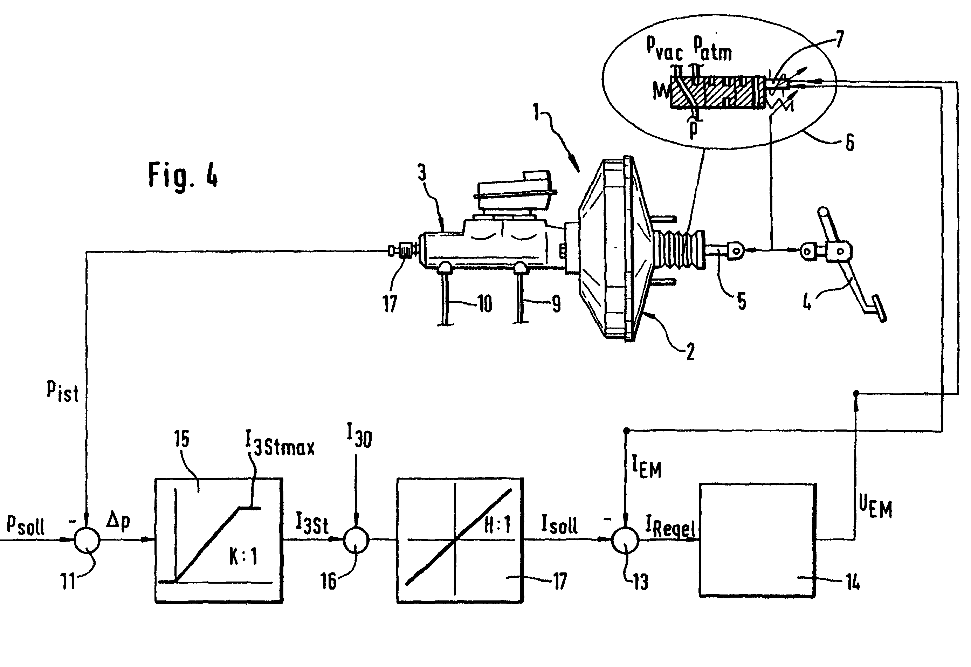

Bei dem in Fig. 4 gezeigten System wird die Regelabweichung Δp schließlich einem nicht linearen Übertragungsglied 15 mit Beschränkung der Ausgangsgröße nach oben und unten zugeführt, dem wirkungsmäßig ein linearer Verstärker 17 mit Verstärkung H nachgeschaltet ist. Zu der Ausgangsgröße I_{3St} des Druckreglers 15 wird ein Vorsteuerungswert I₃₀ hinzuaddiert, der durch Auflösen von folgenden Gleichungen ermittelt wird:
I₃₀ * H = unterer Grenzwert des Regelbereichs
(I_{3Stmax} + I₃₀) * H = oberer Grenzwert des Regelbereichs, wobei I_{3Stmax} die obere Begrenzung des nicht linearen Druckreglers 80 darstellt.

## Patentansprüche

1. Verfahren zum Betrieb eines pneumatischen Bremskraftverstärkers für Kraftfahrzeuge, der eine bewegliche Wand sowie ein eine auf die bewegliche Wand einwirkende pneumatische Druckdifferenz steuerndes Steuerventil (6) aufweist, das mindestens zwei Dichtsitze sowie einen mit den Dichtsitzen zusammenwirkenden elastischen Ventilkörper aufweist und einerseits durch den Fahrer mittels einer Betätigungsstange (5) und andererseits unabhängig vom Fahrerwillen durch einen mit einem der Dichtsitze in kraftübertragender Verbindung stehenden Elektromagneten (7) betätigbar ist, wobei dem Bremskraftverstärker (2) ein Hauptbremszylinder (3) nachgeschaltet ist, der mit den einzelnen Fahrzeugrädern zugeordneten Radbremsen in Verbindung steht, **dadurch gekennzeichnet, daß** der im Hauptbremszylinder (3) eingesteuerte hydraulische Druck (Pᵢₛₜ)ermittelt und nach einem Vergleich mit einem Druckvorgabesignal (P_{Soll}) einem Druckregler (8;80;81) zugeführt wird, dessen Ausgangsgröße einem Steuerstrom (I_{St};I_{1St};I_{2St}) für den Elektromagneten (7) entspricht und einem Begrenzer (12;120;121) zugeführt wird, der die Grenzwerte des gewünschten Regelbereichs festlegt und dessen Ausgangsgröße (I_{Soll}) mit dem Wert (I_{EM}) des dem Elektromagneten (7) zugeführten Stromes verglichen wird und das Vergleichsergebnis (I_{Regel}) einem Stromregler (14) zugeführt wird, der die an den Elektromagneten (7) anzulegende Spannung (U_{EM}) erzeugt.

2. Verfahren nach Anspruch 1 **dadurch gekennzeichnet, daß** der Druckregler (8) als ein proportional wirkender Regler (P-Regler) ausgebildet ist.

3. Verfahren nach Anspruch 1 oder 2 **dadurch gekennzeichnet, daß** zur Ausgangsgröße(I_{St};I_{1St};I_{2St}) des Druckreglers (8;80;81) ein Vorsteuerungswert (I₀;I₁₀;I₂₀) hinzuaddiert wird, um die Reglerverstärkung zu reduzieren.

4. Verfahren nach Anspruch 3 **dadurch gekennzeichnet, daß** der Druckregler als nichtlineares Übertragungsglied (80) ausgebildet ist, wobei der Vorsteuerungswert (I₁₀) den unteren Grenzwert des Regelbereichs sicherstellt, dessen oberer Grenzwert vom Begrenzer (120) geliefert wird.

5. Verfahren nach Anspruch 3 **dadurch gekennzeichnet, daß** der Druckregler als nichtlineares Übertragungsglied (81) ausgebildet ist, wobei der Vorsteuerungswert (I₂₀) den oberen Grenzwert des Regelbereichs sicherstellt, dessen unterer Grenzwert vom Begrenzer (121) geliefert wird.

6. Verfahren zum Betrieb eines pneumatischen Bremskraftverstärkers für Kraftfahrzeuge, der eine bewegliche wand sowie ein eine auf die bewegliche Wand einwirkende pneumatische Druckdifferenz steuerndes Steuerventil (6) aufweist, das mindestens zwei Dichtsitze sowie einen mit den Dichtsitzen zusammenwirkenden elastischen Ventilkörper aufweist und einerseits durch den Fahrer mittels einer Betätigungsstange (5) und andererseits unabhängig vom Fahrerwillen durch einen mit einem der Dichtsitze in kraftübertragender Verbindung stehenden Elektromagneten (7) betätigbar ist, wobei dem Bremskraftverstärker (2) ein Hauptbremszylinder (3) nachgeschaltet ist, der mit den einzelnen Fahrzeugrädern zugeordneten Radbremsen in Verbindung steht, **dadurch gekennzeichnet, daß** der im Hauptbremszylinder (3) eingesteuerte hydraulische Druck (Pᵢₛₜ) ermittelt und nach einem Vergleich mit einem Druckvorgabesignal (P_{Soll}) einem nichtlinearen Übertragungsglied (15) mit Beschränkung nach oben und unten zugeführt wird, dem ein Verstärker (17) nachgeschaltet ist, dessen Ausgangsgröße mit dem Wert des dem Elektromagneten (7) zugeführten Stromes (I_{EM}) verglichen wird und das Vergleichsergebnis einem Stromregler (14) zugeführt wird, der die an den Elektromagneten (7) anzulegende Spannung (U_{EM}) erzeugt.

7. Verfahren nach Anspruch 6 **dadurch gekennzeichnet, daß** zur Ausgangsgröße (I_{3ST}) des nichtlinearen Übertragungsglieds (15) ein Vorsteuerungswert (I₃₀) hinzuaddiert wird.

## Claims

1. Method of operating a pneumatic brake power booster for automotive vehicles, including a movable wall and a control valve (6) controlling a pneumatic pressure differential which acts upon the movable wall, the control valve having at least two sealing seats and an elastic valve member which interacts with the sealing seats, and being operable by the driver by way of an actuating rod (5), on the one hand, and irrespective of the driver's wish by a solenoid (7) which is in a force-transmitting connection with one of the sealing seats, on the other hand, wherein a master brake cylinder (3) is connected downstream of the brake power booster (2) and connected to wheel brakes associated with the individual vehicle wheels,
**characterized in that** the hydraulic pressure (Pᵢₛₜ) introduced into the master brake cylinder (3) is determined and, following a comparison with a preset pressure value signal (P_{Soll}), is sent to a pressure controller (8, 80, 81) having an output quantity which corresponds to a control current (I_{St}, I_{1St}, I_{2St}) for the solenoid (7) and is supplied to a limiter (12, 120, 121) which defines the limit values of the desired control range, and the output quantity (I_{Soll}) of the limiter is compared with the value (I_{EM}) of the current supplied to the solenoid (7), and the comparison result (I_{Regel}) is sent to a current controller (14) which generates the voltage (U_{EM}) to be applied to the solenoid (7).

2. Method as claimed in claim 1,
**characterized in that** the pressure controller (8) is configured as a proportionally acting controller (P-controller).

3. Method as claimed in claim 1 or claim 2,
**characterized in that** a pre-control value (I₀, I₁₀, I₂₀) is added to the output quantity (I_{St}, I_{1St}, I_{2St}) of the pressure controller (8, 80, 81) in order to reduce the boosting of the controller.

4. Method as claimed in claim 3,
**characterized in that** the pressure controller is configured as a non-linear transmission member (80), and the pre-control value (I₁₀) provides for the bottom limit value of the control range, and the top limit value thereof is furnished by the limiter (120).

5. Method as claimed in claim 3,
**characterized in that** the pressure controller is configured as a non-linear transmission member (81), and the pre-control value (I₂₀) provides for the top limit value of the control range, and the bottom limit value thereof is furnished by the limiter (121).

6. Method of operating a pneumatic brake power booster for automotive vehicles, including a movable wall and a control valve (6) controlling a pneumatic pressure differential which acts upon the movable wall, the control valve having at least two sealing seats and an elastic valve member which interacts with the sealing seats, and being operable by the driver by way of an actuating rod (5), on the one hand, and irrespective of the driver's wish by a solenoid (7) which is in a force-transmitting connection with one of the sealing seats, on the other hand, wherein a master brake cylinder (3) is connected downstream of the brake power booster (2) and is connected to wheel brakes associated with the individual vehicle wheels,
**characterized in that** the hydraulic pressure (Pᵢₛₜ) introduced into the master brake cylinder (3) is determined and, following a comparison with a preset pressure value signal (P_{Soll}), is sent to a non-linear transmission member (15) with an upward and downward limitation, connected downstream of which transmission member is a booster (17) having an output quantity which is compared with the value of the current (I_{EM}) supplied to the solenoid (7), and the comparison result is sent to a current controller (14) which generates the voltage (U_{EM}) that is to be applied to the solenoid (7).

7. Method as claimed in claim 6,
**characterized in that** a pre-control value (I₃₀) is added to the output quantity (I_{3St}) of the non-linear transmission member (15).

## Revendications

1. Procédé d'exploitation d'un servofrein pneumatique pour véhicules automobiles, qui comporte une paroi mobile ainsi qu'une soupape de commande (6) qui commande la différence de pression pneumatique agissant sur la paroi mobile et qui comporte au moins deux sièges d'étanchéité ainsi qu'un corps de soupape élastique coopérant avec les sièges d'étanchéité, et qui peut être actionnée d'une part par le conducteur au moyen d'une tige d'actionnement (5) et d'autre part, indépendamment de la volonté du conducteur, par un électro-aimant (7) qui est en liaison de transmission de force avec l'un des sièges d'étanchéité, derrière le servofrein (2) étant monté un cylindre de freinage principal (3) qui est en liaison avec des freins de roue associés aux différentes roues du véhicule, **caractérisé en ce que** la pression hydraulique (Pᵢₛₜ) introduite dans le cylindre de freinage principal (3) est déterminée et, après une comparaison avec un signal de consigne de pression (P_{Soll}), est envoyée à un régulateur de pression (8 ; 80; 81) dont la grandeur de sortie correspond à un courant de commande (I_{St}; I_{1St}; I_{2St}) pour l'électro-aimant (7) et est envoyée à un limiteur (12; 120; 121) qui définit les valeurs limites de la plage de régulation voulue et dont la grandeur de sortie (I_{Soll}) est comparée à la valeur (I_{EM}) du courant envoyé à l'électro-aimant (7), le résultat de la comparaison (I_{Regel}) étant envoyé à un régulateur de courant (14) qui produit la tension (U_{EM}) à appliquer à l'électro-aimant (7).

2. Procédé selon la revendication 1, **caractérisé en ce que** le régulateur de pression (8) est réalisé en tant que régulateur agissant de manière proportionnelle (régulateur P).

3. Procédé selon la revendication 1 ou 2, **caractérisé en ce qu'**on ajoute, à la grandeur de sortie (I_{St}; I_{1St}; I_{2St}) du régulateur de pression (8 ; 80; 81), une valeur de commande pilote (I₀ ; I₁₀; I₂₀), afin de réduire l'amplification du régulateur.

4. Procédé selon la revendication 3, **caractérisé en ce que** le régulateur de pression est réalisé en tant qu'organe de transmission (80) non linéaire, la valeur de commande pilote (I₁₀) assurant la valeur limite inférieure de la plage de régulation dont la valeur limite supérieure est fournie par le limiteur (120).

5. Procédé selon la revendication 3, **caractérisé en ce que** le régulateur de pression est réalisé en tant qu'organe de transmission (81) non linéaire, la valeur de commande pilote (I₂₀) assurant la valeur limite supérieure de la plage de régulation dont la valeur limite inférieure est fournie par le limiteur (121).

6. Procédé d'exploitation d'un servofrein pneumatique pour véhicules automobiles qui comporte une paroi mobile ainsi qu'une soupape de commande (6) qui commande la différence de pression pneumatique agissant sur la paroi mobile et qui comporte au moins deux sièges d'étanchéité ainsi qu'un corps de soupape élastique coopérant avec les sièges d'étanchéité, et qui peut être actionnée d'une part par le conducteur au moyen d'une tige d'actionnement (5) et d'autre part, indépendamment de la volonté du conducteur, par un électro-aimant (7) qui est en liaison de transmission de force avec l'un des sièges d'étanchéité, derrière le servofrein (2) étant monté un cylindre de freinage principal (3) qui est en liaison avec des freins de roue associés aux différentes roues du véhicule, **caractérisé en ce que** la pression hydraulique (Pᵢₛₜ) introduite dans le cylindre de freinage principal (3) est déterminée et, après une comparaison avec un signal de consigne de pression (P_{Soll}), est envoyée à un organe de transmission (15) non linéaire avec limitation vers le haut et vers le bas, derrière lequel est monté un amplificateur (17) dont la grandeur de sortie est comparée à la valeur du courant (I_{EM}) envoyée à l'électro-aimant (7), le résultat de la comparaison étant envoyé à un régulateur de courant (14) qui produit la tension (U_{EM}) à appliquer à l'électro-aimant (7).

7. Procédé selon la revendication 6, **caractérisé en ce qu'**on ajoute à la grandeur de sortie (I_{3ST}) de l'organe de transmission non linéaire (15) une valeur de commande pilote (I₃₀).
